(19) 

Europäisches
Patentamt
European
Patent Office
Office européen
des brevets

(11)  **EP 2 977 858 A1**

(12)  **EUROPEAN PATENT APPLICATION**
published in accordance with Art. 153(4) EPC

(43) Date of publication:
**27.01.2016 Bulletin 2016/04**

(21) Application number: **14769167.9**

(22) Date of filing: **10.02.2014**

(51) Int Cl.:
**G06F 3/01** (2006.01)

(86) International application number:
**PCT/JP2014/000695**

(87) International publication number:
**WO 2014/147946 (25.09.2014 Gazette 2014/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.03.2013 JP 2013058118**

(71) Applicant: **Sony Corporation
Tokyo 108-0075 (JP)**

(72) Inventors:
• **HIGASHINO, Satoru
Tokyo 108-0075 (JP)**

• **HORIGOME, Toshihiro
Tokyo 108-0075 (JP)**
• **SUZUKI, Akira
Tokyo 108-0075 (JP)**
• **GOTO, Naofumi
Tokyo 108-0075 (JP)**

(74) Representative: **Witte, Weller & Partner
Patentanwälte mbB
Postfach 10 54 62
70047 Stuttgart (DE)**

(54)  **ACCELERATION SENSATION PRESENTATION DEVICE, ACCELERATION SENSATION
PRESENTATION METHOD, AND ACCELERATION SENSATION PRESENTATION SYSTEM**

(57)     An acceleration sense presentation apparatus
includes a vibrator group including a plurality of vibrators;
an input unit to which information having directivity is inputted; and a vibration control unit for continuously
switching a vibrator to be vibrated based on the informa-
tion having directivity.

FIG.13

## Description

Technical Field

The present disclosure relates to an acceleration sense presentation apparatus, an acceleration sense presentation method, and an acceleration sense presentation system.

Background Art

In the game device related art, there is proposed a technology that a user feels a virtual reality corresponding to a content of the game. For example, Patent Document 1 describes a technology that a vibration generator is attached to a user body, and is vibrated at attacked positions.
Patent Document 1: Japanese Patent Application Laid-open No. 2000-210468

Summary of Invention

Problem to be solved by the Invention

The game device described in Patent Document 1 allows the user to really feel an attacked shock, but does not allow the user to feel a force to direct a predetermined direction (acceleration sense), for example.
Accordingly, one object of the present disclosure is to provide an acceleration sense presentation apparatus, an acceleration sense presentation method, and an acceleration sense presentation system that allows a user to feel an acceleration sense.

Means for solving the Problem

In order to solve the above-described problem, the present disclosure provides an acceleration sense presentation apparatus including a vibrator group having a plurality of vibrators, an input unit to which information having directivity is inputted, and a vibration control unit for continuously switching a vibrator to be vibrated based on the information having directivity.
The present disclosure provides an acceleration sense presentation method in an acceleration sense presentation apparatus including inputting information having directivity, continuously switching a vibrator to be vibrated based on the information having directivity.
The present disclosure provides an acceleration sense presentation system including a first apparatus and a second apparatus, in which the first apparatus has a supply unit for supplying the second apparatus with information having directivity, and the second apparatus has a vibrator group having a plurality of vibrators, an input unit to which information having directivity is inputted, and a vibration control unit for continuously switching a vibrator to be vibrated based on the information having directivity.

Effect of the Invention

According to at least one embodiment, an acceleration sense can be presented to a user.

Brief Description of Drawings

[Fig. 1] A diagram showing an example of an appearance of a head gear type device in a first embodiment.
[Fig. 2] A diagram for explaining an acceleration and an angular speed of each axis.
[Fig. 3] A brock diagram for explaining an example of an electrical configuration of the head gear type device in the first embodiment.
[Fig. 4] A diagram for explaining a wearing example of the head gear type device in the first embodiment.
[Fig. 5] A diagram for explaining a status that a head mount display is used.
[Fig. 6] A diagram for explaining an example of an acceleration sense presentation system including the head gear type device in the first embodiment.
[Fig. 7] Fig. 7A and Fig. 7B each is a diagram for explaining an example of an vibrator arrangement in the head gear type device in the first embodiment.
[Fig. 8] Fig. 8A and Fig. 8B each is a diagram for explaining an example of vibrators to be vibrated.
[Fig. 9] Fig. 9A, Fig. 9B and Fig. 9C each is a diagram for explaining an example of a driving signal to be PMW modulated.
[Fig. 10] A diagram for showing an example of an appearance of a mobile terminal in a second embodiment.
[Fig. 11] An exploded perspective diagram for explaining an example of a configuration of the mobile terminal in the second embodiment.
[Fig. 12] A brock diagram for explaining an example of an electrical configuration of the mobile terminal in the second embodiment.
[Fig. 13] A diagram for explaining an example of a relationship between a navigation direction and a change direction of vibrated positions of the vibrators.
[Fig. 14] A diagram for explaining another example of a relationship between a navigation direction and a change direction of vibrated positions of the vibrators.
[Fig. 15] An exploded perspective diagram for explaining an example of a headphone device configuration in a third embodiment.
[Fig. 16] A brock diagram for explaining an example of an electrical configuration of the headphone device in the third embodiment.
[Fig. 17] Fig. 17A schematically shows a user wearing the headphone device in the third embodiment, and Fig. 17B and Fig. 17C each shows a diagram for explaining a change of vibrated positions in the headphone device.

[Fig. 18] Fig. 18A schematically shows a user wearing the headphone device in the third embodiment, and Fig. 18B and Fig. 18C each shows a diagram for explaining a change of vibrated positions in the headphone device.

[Fig. 19] Fig. 19A schematically shows a user wearing the headphone device in the third embodiment, and Fig. 19B and Fig. 19C each shows a diagram for explaining a change of vibrated positions in the headphone device.

[Fig. 20] Fig. 20A schematically shows a user wearing the headphone device in the third embodiment, and Fig. 20B and Fig. 20C each shows a diagram for explaining a change of vibrated positions in the headphone device.

[Fig. 21] Fig. 21A schematically shows a user wearing the headphone device in the third embodiment, and Fig. 21B and Fig. 21C each shows a diagram for explaining a change of vibrated positions in the headphone device.

[Fig. 22] Fig. 22A schematically shows a user wearing the headphone device in the third embodiment, and Fig. 22B and Fig. 22C each shows a diagram for explaining a change of vibrated positions in the headphone device.

Mode(s) for Carrying Out the Invention

Hereinafter, referring to drawings a plurality of embodiments of the present disclosure sill be described in the following orders.

<1. First Embodiment>

<2. Second Embodiment>

<3. Third Embodiment>

<4. Alternative Embodiment>

The embodiments described hereinafter are preferred embodiments of the present disclosure. It should be noted that the present disclosure is not limited to the embodiments.

<1. First Embodiment>

"Appearance of Head Gear Type Device"

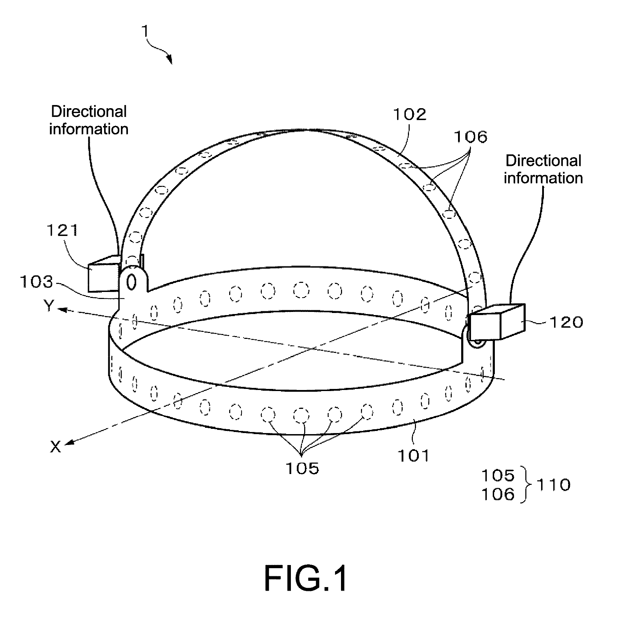

A first embodiment is an example applying an acceleration sense presentation apparatus to a device in a head gear type (referred to as a head gear type device, as appropriate) that is attached to a human (user) head. Fig. 1 shows an example of an appearance of a head gear type device 1.

The head gear type device 1 includes a first frame 101, a second frame 102, attachment units 103, a plurality of first vibrators 105 built-in the first frame 101, a plurality of second vibrators 106 built-in the second frame 102, a first vibration control unit 120, and a second vibration control unit 121. A plurality of the first vibrators 105 and a plurality of the second vibrators 106 configure a vibrator group 110. Hereinafter, each component will be described in detail.

The first frame 101 is formed of a substantially circle plate member, for example, so as to cover at least a part of a user head. On the first frame 101, a pair of attachment units 103 are coaxially formed in order to attach a second frame 102 to the first frame 101. The first frame 101 is desirably formed by injection molding plastic, for example, in order to reduce a weight of the head gear type device 1 itself. It should be appreciated that it is not limited to plastic. The first frame 101 may be formed of a metal plate, for example.

The second frame 102 is formed of an arc-like plate member, for example, being in contact with around a top of the user head. The second frame 102 is attached to the first frame 101 via the attachment units 103. The second frame 102 is desirably formed by injection molding plastic, for example, in order to reduce a weight of the head gear type device 1 itself. It should be appreciated that it is not limited to plastic. The second frame 102 may be formed of a metal plate, for example.

The first vibrator 105 is configured, for example, of a vibration motor. It should be appreciated that it is not limited to the vibration motor as long as it is vibrated. The first vibrator 105 may be configured of a piezo element. A plurality of first vibrators 105 is built-in the first frame 101. Note that reference numerals are attached to only a part of the first vibrators 105 in order to prevent a complex illustration in Fig. 1. The number of the first vibrators 105 and a space between the first vibrators 105 can be appropriately set. The first vibrators 105 vibrate in accordance with a driving control by the first vibration control unit 120. The vibration of the first vibrators 105 transmit to the user head.

The second vibrator 106 is configured, for example, of a vibration motor. It should be appreciated that it is not limited to the vibration motor as long as it is vibrated. The second vibrator 106 may be configured of a piezo element. A plurality of second vibrators 106 is built-in the second frame 102. Note that reference numerals are attached to only a part of the second vibrators 106 in order to prevent a complex illustration in Fig. 1. The number of the second vibrators 106 and a space between the second vibrators 106 can be appropriately set. The second vibrators 106 vibrate in accordance with a driving control by the second vibration control unit 121. The vibration of the second vibrators 106 transmit to the user head.

The first vibration control unit 120 sets the first vibrators 105 to be vibrated. Furthermore, a magnitude of the vibration by the first vibrators 105 is controlled. The control of the first vibrators 105 is done in accordance with information having directivity (referred to as directional information, as appropriate) supplied to the first vibration control unit 120. The first vibration control unit 120 vibrates the first vibrators 105 with an adequate magnitude of the vibration in accordance with the directional information, and continuously switches a vibration position by continuously switching the first vibrators 105 to be vibrated. Note that each magnitude of the vibration may be different when the first vibrators 105 to be vibrated are continuously switched. Furthermore, a plurality of (for example, several units of) the first vibrators 105 may be vibrated, and the vibrators to be vibrated may be switched per unit.

The second vibration control unit 121 sets the second vibrators 106 to be vibrated. Furthermore, a magnitude of the vibration by the second vibrators 106 is controlled. The control of the second vibrators 106 is done in accordance with the directional information supplied to the second vibration control unit 121. The second vibration control unit 121 vibrates the second vibrators 106 with an adequate magnitude of the vibration in accordance with the directional information, and continuously switches a vibration position by continuously switching the second vibrators 106 to be vibrated. Note that each magnitude of the vibration may be different when the second vibrators 106 to be vibrated are continuously switched. Furthermore, a plurality of (for example, several units of) the second vibrators 106 may be vibrated, and the vibrators to be vibrated may be switched per unit. In addition, the first vibration control unit 120 and the second vibration control unit 121 may be configured of one vibration control unit.

The head gear type device 1 may have a configuration other than that shown in Fig. 1. For example, on the first frame 101 and the second frame 102, a sheet or a cushion material may be provided in order to protect a head of a wearer. In addition, a mechanism for adjusting a diameter size of the first frame 101 may be provided on the first frame 101.

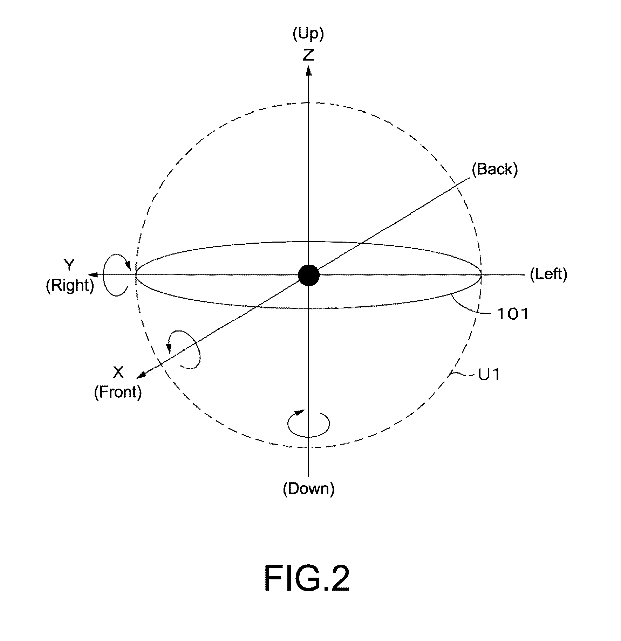

As shown in Fig. 2, to a user wearing the head gear type device 1 (referred to as a user U1, as appropriate), axes to the user U1 can be set. In the example shown in Fig. 2, a head of the user U1 is schematically shown by a circular dotted line. An axis of the user U1 in a longitudinal direction is referred to as an X axis, as appropriate. An axis orthogonal to the X axis in a lateral direction of the user U1 is referred to as an Y axis, as appropriate. An axis orthogonal to the X axis and the Y axis in a vertical direction of the user U1 is referred to as a Z axis, as appropriate. An XYZ space having a center on a center part of the first frame 101 can be defined. It should be appreciated that the X axis, the Y axis, and the Z axis are set for convenience of explanation, and the content of the present disclosure is not limited thereto.

In a device different from the head gear type device 1, the X axis, the Y axis, and the Z axis can be set to the user of the device. For example, accelerations to the respective axes can be acquired to the user using a sensor etc. In addition, using a sensor etc., an angular speed around the X axis (roll), an angular speed around the Y axis (pitch), and an angular speed around the Z axis (yaw) can be acquired to the user. It should be appreciated that not all but at least a part of the accelerations and the angular speeds may be acquired.

These acceleration and angular speeds are information having directivity. In other words, the acceleration may have a positive or negative value depending on a direction of the acceleration. Similarly, the angular speeds may have a positive or negative value depending on a rotational direction around the axis. The direction or the rotational direction may be set to positive or negative, as appropriate. The directional information acquired by the sensor etc. is supplied to the head gear type device 1.

The head gear type device 1 continuously switches the vibration control to the vibrator based on the directional information. The vibration control means all or a part of a control for setting the position of the vibrator to be vibrated firstly, a control for switching the vibrator to be vibrated, a control to the magnitude of the vibration, a control of a vibration time, and a control for not vibrating the vibrator. In this manner, an acceleration sense that other user feels can be presented to the user U1 of the head gear type device 1.

In addition, if the directional information is synchronized with, for example, video image information and sound information in game, the acceleration sense in accordance with a game progress can be presented to the user. Note that the acceleration sense presented to the user is a force having directivity that the user feels based on the vibration of the vibrator in accordance with the directional information, and can be distinguished from the acceleration acquired by the sensor etc.

"Electrical Configuration"

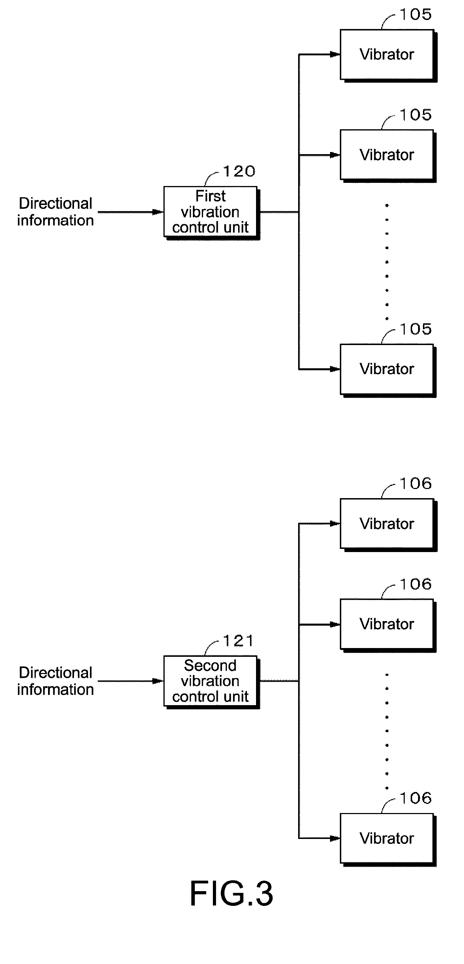

Fig. 3 shows an electrical configuration example of the head gear type device 1. As described above, the head gear type device 1 has the first vibration control unit 120 and the second vibration control unit 121. The first vibration control unit 120 sets the first vibrators 105 to be vibrated and the magnitude of the vibration thereof depending on the directional information inputted. And, the first vibration control unit 120 generates a driving signal for vibrating the first vibrators 105, and supplies the first vibrator 105 with the driving signal generated. The first vibration control unit 120 switches the first vibrators 105 to be vibrated at a predetermined timing.

The second vibration control unit 121 sets the second vibrators 106 to be vibrated and the magnitude of the vibration thereof depending on the directional information inputted. And, the second vibration control unit 121 generates a driving signal for vibrating the second vibrators 106, and supplies the second vibrators 106 with the driving signal generated. The second vibration control unit 121 switches the second vibrator 106 to be vibrated at a predetermined timing.

"Wearing Example of Head Gear Type Device"

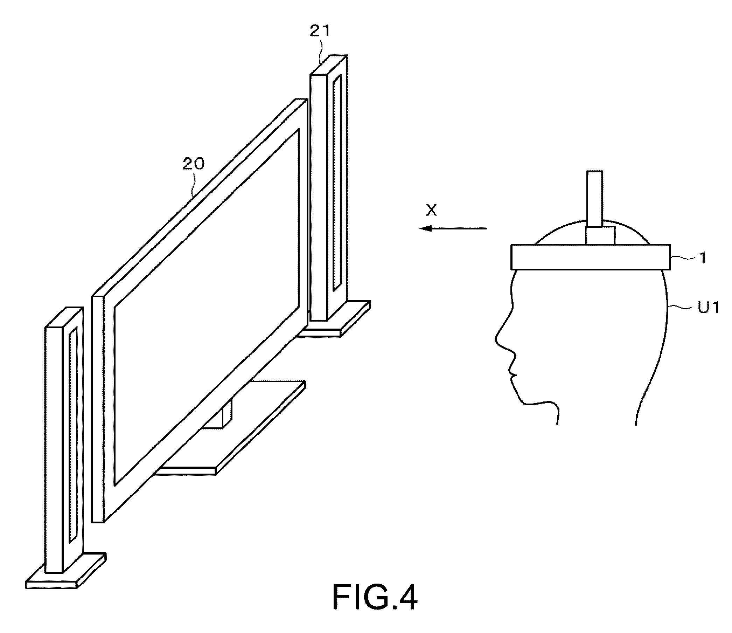

Next, a wearing example of the head gear type device 1 to the user is described referring to Fig. 4. As shown in Fig. 4, the user U1 can wear the head gear type device 1 on the head. In this way, the head gear type device 1 is synchronized with a video content displayed on the display 20, and can present the acceleration sense to the user 1. In other words, the first vibration control unit 120 and the second vibration control unit 121 changes the vibrators to be vibrated by synchronizing with the video image content displayed on the display 20.

The user U1 can feel the acceleration sense synchronized with the video image content together with the image display on the display 20 and the sound outputted from the speakers 21 such that the virtual reality sense can be enjoyed. Note that the example shown in Fig. 4 in only illustrative, and is not limited thereto. Different from the display 20 and the speakers 21 shown in Fig. 4, it is possible to present the user U1 with the acceleration sense while synchronizing with the image displayed on the display in a game device installed on a game center and an amusement park or in a movie theater, for example.

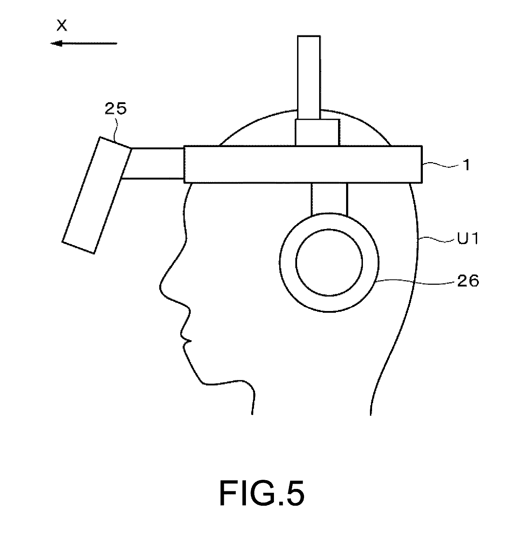

As an alternative embodiment of the head gear type device 1, a head mount display 25 and speakers 26 may be further included. At this time, a wearing example of the head gear type device 1 to the user U1 is shown in Fig. 5.

As shown in Fig. 5, the head gear type device 1 may include the head mount display 25 at a front side of the device in the X axis and a pair of speakers 26 at left and right of the device in the Y axis. In this case, the head mount display 25 is positioned in front of eyes of the user U1, and a pair of speakers 26 is positioned near both ears of the user U1.

By supplying the head mount display 25 with the video image signal, the user U1 can see the video image displayed on the head mount display 25. By supplying the speakers 26 with the sound signal, the user U1 can hear the sound outputted from the speakers 26. The head gear type device 1 can supply the user U1 with the video image, the sound and the acceleration sense together. As a result, different from the device using a stage in the related art, the user can feel the virtual reality at home using the small-sized head gear type device 1.

"System using Acceleration Sense Presentation Apparatus"

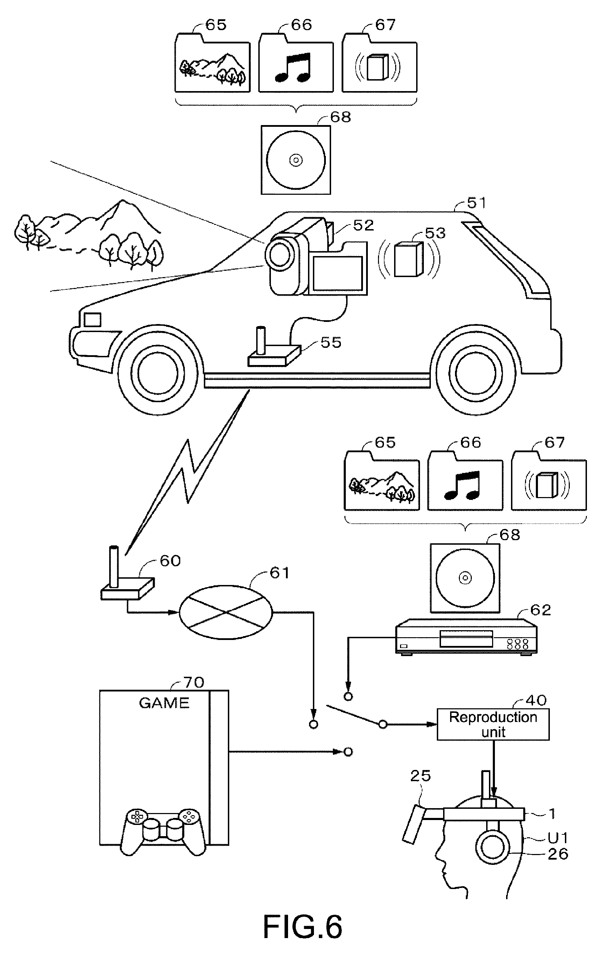

Next, an example of a system using the head gear type device 1 configured as described above will be described. Fig. 6 shows an example of the system using the head gear type device 1. The example shown in Fig. 6 uses the head gear type device 1 having the head mount display 25 and the speakers 26.

As shown in Fig. 6, the head gear type device 1 acquires the directional information from a reproduction unit 40. The reproduction unit 40 may be incorporated in the head gear type device 1, or may be incorporated in a device different from the head gear type device 1. The reproduction unit 40 acquires the directional information, the video image signal, the sound signal or the like from an external device. Examples of the external device include an image capturing apparatus, a passenger apparatus equipped with an image capturing apparatus, a passenger apparatus to be remote-controlled, a robot to be remote-controlled, a remote control model, a game device executing a game program, and a recording medium.

The reproduction unit 40 acquires the direction information etc. from these external devices via a network of the Internet, for example. The reproduction unit 40 applies a variety of processing such as decode processing, synchronizing processing, and amplifying processing to the directional information etc. acquired. Also, the reproduction unit 40 can transmit the video image, the sound, and the directional information, for example, recorded in a software program of a game and a recording medium such as DVD (Digital Versatile Disc) to the head gear type device 1.

The reproduction unit 40 can transmit the video image signal received via, for example, an information processing apparatus and a network to the head mount display 25 of the head gear type device 1. In this way, the head gear type device 1 can display the video image on the head mount display 25. In addition, the reproduction unit 40 can transmit the sound signal received via, for example, an information processing apparatus and a network to the speakers 26 of the head gear type device 1. In this way, the head gear type device 1 can output the sound from the speakers 26. Furthermore, the reproduction unit 40 supplies the head gear type device 1 with the directional information.

The first vibration control unit 120 of the head gear type device 1 vibrates the predetermined first vibrators 105 in accordance with the directional information. In addition, it switches the first vibrators 105 to be vibrated in accordance with the directional information. The second vibration control unit 121 of the head gear type device 1 vibrates the predetermined second vibrators 106 in accordance with the directional information. In addition, it switches the second vibrators 106 to be vibrated in accordance with the directional information.

For example, in the example shown in Fig. 6, the user U1 can simulate a feel similar to a driver of the automobile 51 based on a variety of signal information from the automobile 51 running at a remote location. Specifically, it is achieved if the automobile 51 includes an image capturing apparatus 52 that captures a landscape front of the automobile. Here, the image capturing apparatus 52 includes, for example, an image capturing unit to capture a travelling direction of the automobile 51 and to record the travelling direction as the video image signal and a sound recording unit to record a sound inputted via a speaker as a sound signal.

In addition, the image capturing apparatus 52 includes a sensor 53. The sensor 53 is for measuring an acceleration of gravity and an angle speed generated by movement of the automobile 51. As the sensor 53, for example, MEMS (Micro Electro Mechanical Systems) sensor in a piezo resistive, capacitance, or thermal detection type, a piezoelectric or electrodynamic sensor as well as known sensors can be used.

If the sensor 53 is an acceleration measurement sensor, an acceleration vector received from the ground by a driver can be detected from total acceleration vectors X, Y, Z, where a longitudinal direction of the automobile 51 is defined as an X direction, a lateral direction of the automobile 51 is defined as an Y direction, and an upper direction of the automobile is defined as a Z direction, for example. If the sensor 53 is an angular speed measurement sensor, an angular speed around the X axis, an angular speed around the Y axis, and an angular speed around the Z axis can be detected. Note that the sensor 53 may be disposed within the automobile 51 separately and independently from the image capturing apparatus 52.

As described above, the video image signal and the sound signal captured by the image capturing apparatus 52 of the automobile 51 and the sensor signal detected by the sensor 53 are transmitted from a transmitter 55 included in the automobile 51 to the reproduction unit 40. Note that, in the example shown in Fig. 6, the reproduction unit 40 can receive a variety of signals from a remote automobile 51 via a receiver 60 or the Internet 61. It should be appreciated that the example shown in Fig. 6 is illustrative and the reproduction unit 40 can directly receive a variety of signals via a wired connection, for example.

The head gear type device 1 can provide the user U1 with the virtual reality sense by receiving a variety of information from the video image reproduction device 62 such as a DVD recorder and a hard disk recorder via the reproduction unit 40.

In the example shown in Fig. 6, the reproduction unit 40 can receive the video image signal, the sound signal, and the directional information from the video image reproduction device 62, and transmit to head gear type device 1. For example, a variety of data detected by the image capturing apparatus 52 and the sensor 53 within the automobile 51 can be synchronized and recorded in a recording medium 68 such as a DVD, an SD card, a memory stick™ and a tape as video image data 65, sound data 66, and directional information data 67. Accordingly, the video image reproduction device 62 can transmit the video image data 65, the sound data 66 and the directional information data 67 recorded in the recording medium 68 to the head gear type device 1 via the reproduction unit 40. Note that, in this case, the reproduction unit 40 can be included in the video image reproduction device 62 or the head gear type device 1.

In this manner, the head gear type device 1 displays the video image on the head mount display 25 and outputs the sound from the speakers 26 based on a variety of data recorded in the recording medium 68. Furthermore, by continuously switching the vibration position by the vibrator of the head gear type device 1, the acceleration sense is presented to the user U1. As a result, the user U1 can experience simulatively a landscape that the driver of the automobile 51 looks, a sound that the driver of the automobile 51 hears, and a feeling that the driver of the automobile 51 experiences.

In addition, the head gear type device 1 can provide the user U1 with the virtual reality sense by receiving a variety of signals from the game device 70 via the reproduction unit 40.

In the example shown in Fig. 6, the reproduction unit 40 can receive the video image signal, the sound signal, and the directional information from the game device 70, and can transmit them to the head gear type device 1. For example, it is possible to incorporate in advance directional information data matched to a character or a vehicle into a game software program operable in the game device 70, for example. In this manner, the game device 70 can transmit the video image data, the sound data, and the directional information data incorporated in the game software program to the head gear type device 1 via the reproduction unit 40. Note that, in this case, the reproduction unit 40 can be included in the game device 70 or the head gear type device 1.

In this manner, the head gear type device 1 displays the video image on the head mount display 25 and outputs the sound from speakers 26 based on a variety of data incorporated into the game software program operable in the game device 70. Furthermore, by continuously switching the vibration position by the vibrator of the head gear type device 1, the acceleration sense is presented to the user U1. As a result, the user U1 can enjoy the virtual reality sense corresponding to a game character or a movement of a vehicle.

"Vibration Control of Vibrators"

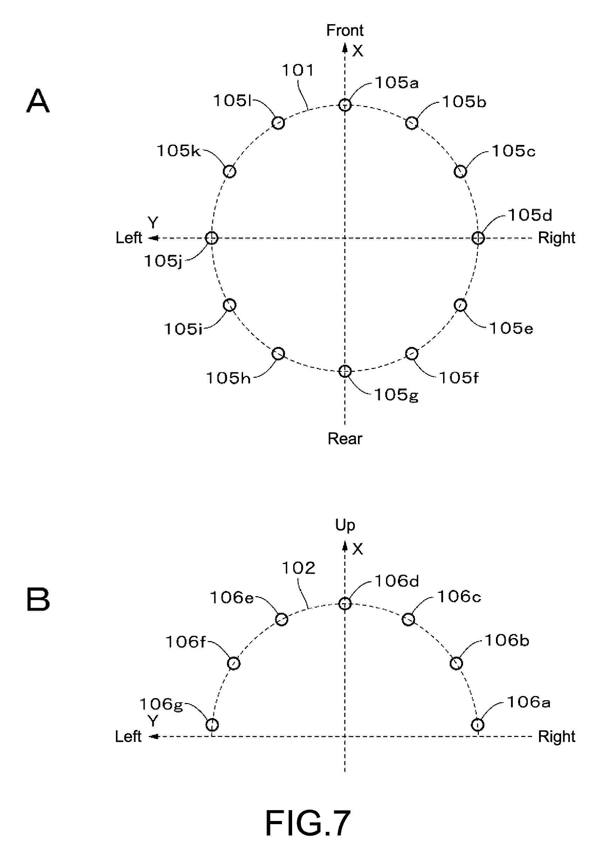

Next, an example of a vibration control of vibrators will be described. Fig. 7A shows an example of a plurality of first vibrators 105 built-in the first frame 101. In the example shown in Fig. 7A, the first vibrator 105a is built-in a position corresponding to a front of the user U1 in the first frame 101. Using the first vibrator 105a as a start point, twelve vibrators (105a, 105b, 105c, 105d, 105e, 105f, 105g, 105h, 105i, 105j, 105k, and 105l) are built-in the first frame 101 clockwise at equal intervals. It should be appreciated that the number of the first vibrators 105 can be changed, as appropriate.

Fig. 7B shows one example of a plurality of second vibrators 106 built-in the second frame 102. In the example shown in Fig. 7B, a second vibrator 106a is built-in a position corresponding to a right side of the user U1 in the second frame 102. Using the second vibrator 106a as a start point, seven vibrators (106a, 106b, 106c, 106d, 106e, 106f, 106g) are built-in the second frame 102 anticlockwise at equal intervals. It should be appreciated that the number of the second vibrators 106 can be changed, as appropriate.

For example, it is assumed that, by the directional information, a positive acceleration signal in the Y axis direction is shown. Note that the direction from right to left in the Y axis is taken as positive, and the direction from left to right in the Y axis is taken as negative. The first vibration control unit 120 to which the directional information is inputted uses the first vibrator 105d as the start point and sequentially switches the vibrators to be vibrated in the following order: the vibrator 105c, the first vibrator 105b, the first vibrator 105a, the first vibrator 1051, and the first vibrator 105k. Together with the control, the first vibration control unit 120 controls switching of the vibrators to be vibrated in the following order: the first vibrator 105e, the first vibrator 105f, the first vibrator 105g, the first vibrator 105h, and the first vibrator 105i. Finally, the control to vibrate the first vibrator 105j is done.

The second control unit 121 to which the directional information is inputted uses the second vibrator 106a as the start point and sequentially switches the vibrators to be vibrated in the following order: the second vibrator 106b, the second vibrator 106c, the second vibrator 106d, the second vibrator 106e, the second vibrator 106f, and the second vibrator 106g.

The vibration controls by the first vibration control unit 120 and the second vibration control unit 121 are done at the same time or substantially at the same time. By the vibration controls, the user U1 of the head gear type device 1 feels the acceleration sense directing from a right side to a left side. Note that the vibration controls by the first vibration control unit 120 and the second vibration control unit 121 may be repeated several times.

A description is made in more detail. For example, the acceleration in the X axis direction shown by the directional information is defined as ax, the acceleration in the Y axis direction shown by the directional information is defined as ay, and the acceleration in the Z axis direction shown by the directional information is defined as az. In addition, the angular speed in the X axis direction shown by the directional information is defined as $\varphi x$, and the angular speed in the Z axis direction shown by the directional information is defined as $\varphi z$. The directional information is acquired by the sensor of the external device, as described above.

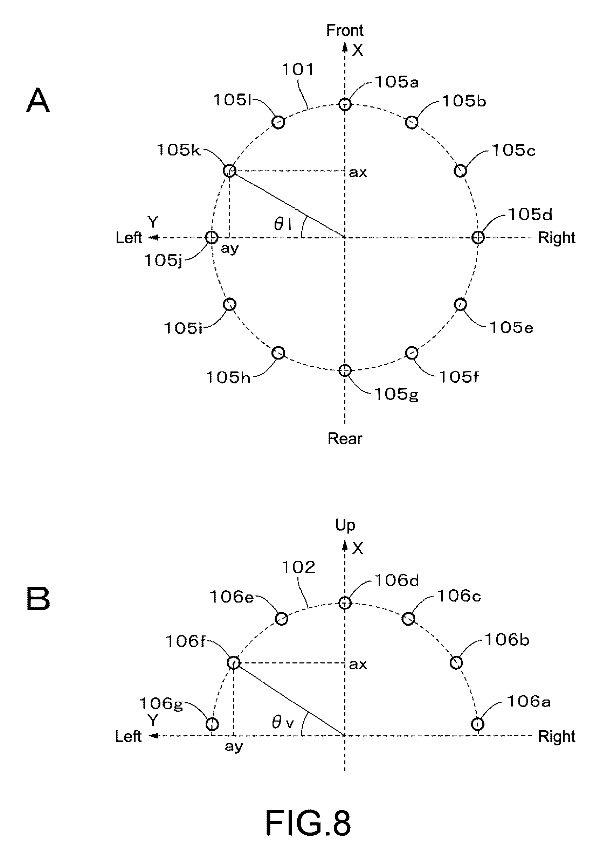

The first vibration control unit 120 sets the first vibrator 105 positioned in $\theta l$ direction around the Z axis as the vibrator at the start point, as shown in Fig. 8A. The $\theta l$ is defined by the following equation (1), for example.

[Numerical Formula 1]

$$\theta_1 = arcsin\left(\frac{ax}{\sqrt{ax \cdot ax + ay \cdot ay}}\right)$$

At this time, the first vibration control unit 120 vibrates the first vibrator 105 to be vibrated at an amplitude, and/or a frequency in proportion to

$$\sqrt{(ax \cdot ax + ay \cdot ay)}$$ for example. In other words, the greater the accelerations ax or ay is, the greater the vibration is. Note that, in Fig. 8A, the first vibrator to be vibrated is shown as the first vibrator 105k, but it not limited thereto.

Furthermore, the first vibration control unit 120 switches the first vibrator 105 to be vibrated in the direction of $\varphi z$ by the speed in proportion to $\varphi z$, for example. In other words, the greater the angular speed $\varphi z$ is, the faster the vibration position switches.

The second vibration control unit 121 sets the second vibrator 106 positioned in $\theta v$ direction around the X axis as the vibrator at the start point, as shown in Fig. 8B. The $\theta v$ is defined by the following equation (2), for example.

[Numerical Formula 2]

$$\theta_v = arcsin\left(\frac{az}{\sqrt{az \cdot az + ay \cdot ay}}\right)$$

At this time, the second vibration control unit 121 vibrates the second vibrator 106 to be vibrated at an amplitude, and/or a frequency in proportion to

$$\sqrt{(az \cdot az + ay \cdot ay)}$$ for example. In other words, the greater the accelerations az or ay is, the greater the vibration is. Note that, in Fig. 8B, the second vibrator to be vibrated is shown as the second vibrator 106f, but it not limited thereto.

Furthermore, the second vibration control unit 121 switches the second vibrator 106 to be vibrated in the direction of $\varphi x$ by the speed in proportion to $\varphi x$, for example. In other words, the greater the angular speed $\varphi x$ is, the faster the vibration position switches.

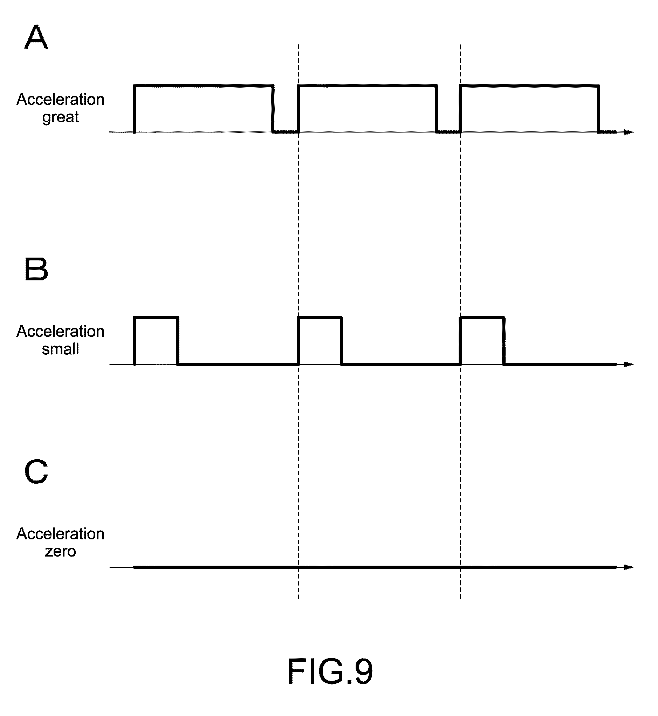

Note that the magnitude of the vibration may be controlled by the driving signal modulated by PWM (Pulse Width Modulation). For example, as shown in Fig. 9A to Fig. 9C, if the acceleration value (absolute value) is great, a driving signal having a great duty ratio is generated. If the acceleration value is small, a driving signal having a small duty ratio is generated. If the acceleration value is 0, a driving signal having a duty ratio of 0 is generated. Depending on the driving signal, the magnitude of the vibration in the first vibrator 105 or the second vibrator 106 is changed.

As described above, the head gear type device in the first embodiment can present a user to an acceleration sense by vibrating a user head and continuously changing a vibration position. In this manner, the user feels (tricky perceive) an acceleration sense.

Note that in the head gear type device 1, a second rotating frame is configured in a Y-Z plane direction. Alternatively or together therewith, a second rotating frame may be disposed in an X-Z plane direction.

<2. Second Embodiment>

A second embodiment is an example applying the acceleration sense presentation apparatus to a mobile terminal. Examples of the mobile terminals include a smart phone, a mobile phone, and a tough pad type computer.

"Configuration of Mobile Terminal"

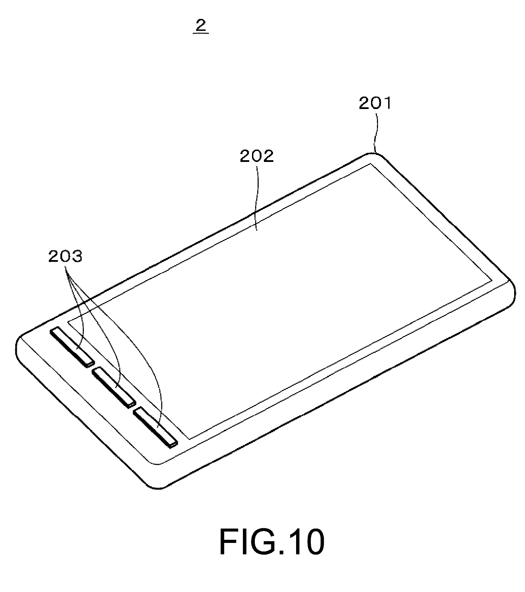

Fig. 10 is a perspective diagram for showing an example of an appearance of a mobile terminal. A mobile terminal 2 is mainly configured of a housing 201, a display unit 202, and an operation input unit 203. The display unit 202 is, for example, a touch panel. In this regard, the display unit 202 functions as an operation input unit.

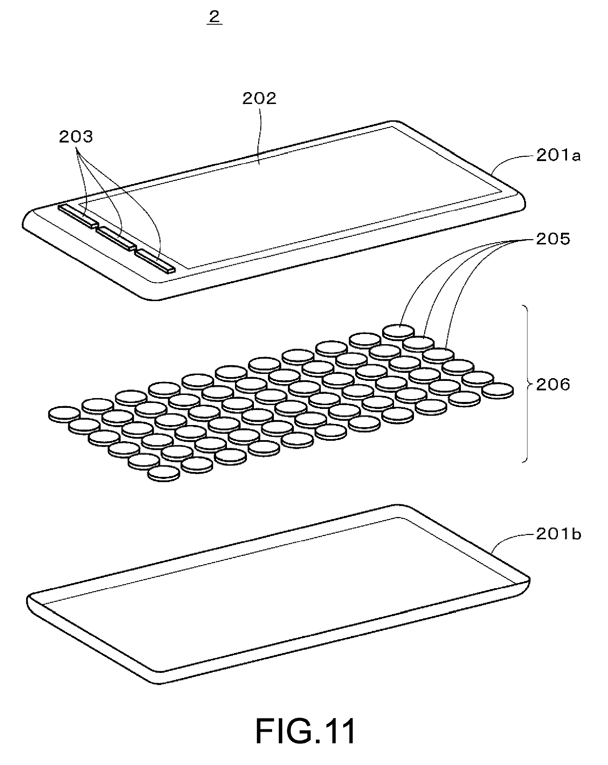

Fig. 11 is an exploded perspective diagram for explaining an example of a configuration of the mobile terminal. The housing 201 is configured, for example, of a top cover 201a and a bottom cover 201b. In an internal space formed by the top cover 201a and the bottom cover 201b, a vibrator group 206 including a plurality of vibrators 205 is housed. A thickness of the bottom cover 201b can be set as appropriate, but is set such that vibration of the vibrator 205 can be transmitted to the user.

Each vibrator 205 of the vibrator group 206 is arranged and attached, for example, to an inner wall of the bottom cover 201b. The vibrator 205 is not especially limited as long as it is vibrated. Here, a vibration motor is used for explanation. Note that in Fig. 11, reference numerals are attached only to a part of the vibrators. Also, in Fig. 11, although 66 vibrators 205 are shown, the number, an arrangement mode of the vibrators 205 can be changed as appropriate. In addition, in the inner space of the mobile terminal 2, a variety of sensors, a circuit substrate, a speaker, a camera module, a communication module, a buttery etc. are housed, but are not shown as appropriate for convenience of explanation.

"Electrical Configuration of Mobile Terminal"

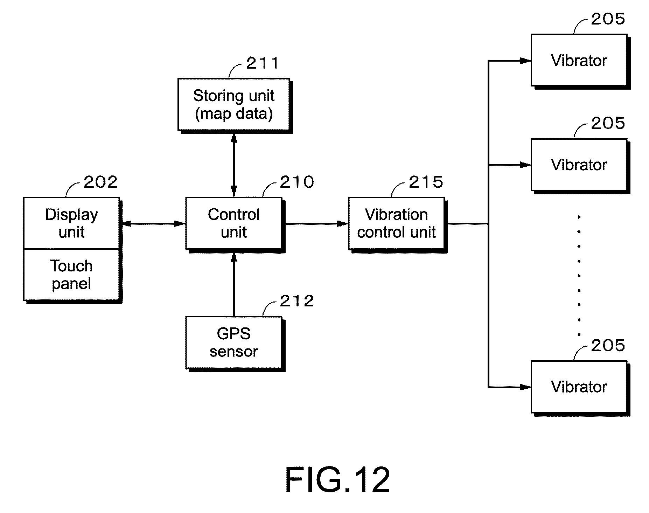

Fig. 12 shows an example of an electrical configuration of the mobile terminal 2. The mobile terminal 2 includes the above-described display unit (touch panel) 202 and vibrator 205 as well as, for example, the control unit 210, a storing unit 211, a GPS (Global Positioning System) sensor 212, and a vibration control unit 215. It should be appreciated that the mobile terminal 2 has a configuration other than that shown.

The control unit 210 is configured, for example, of a CPU (Central Processing Unit), and controls each unit of the mobile terminal 2. For example, the control unit 210 detects a direction to be traveled by a user of the mobile terminal 2 to a target place set in advance based on map data stored in the storing unit 211 and positional information of the mobile terminal 2 supplied from the GPS sensor 212. The control unit 210 supplies the direction detected to the vibration control unit 215 as the directional information. Note that the target place is set by using for example, the display unit 202 and the operation input unit 203.

The storing unit 211 includes a memory such as RAM(Random Access Memory). The storing unit 211 may be built-in the mobile terminal 2, or may be detachable to the mobile terminal 2. In the storing unit 211, a variety of data is stored. For example, map data for navigation is stored. When a navigation function is executed, a map corresponding to the map data is displayed on the display unit 202.

The GPS sensor 212 includes a GPS receiver, and acquires positional information existing at present by the mobile terminal 2. The positional information acquired by the GPS sensor 212 is supplied to the control unit 210.

The vibration control unit 215 controls vibration of each vibrator 205. To the vibration control unit 215, the directional information is inputted from the control unit 210. The vibration control unit 215 determines the vibrator depending on the directional information inputted. Then, vibrated positions are switched by a pattern corresponding to the directional information.

"Vibration Control to Vibrator"

For example, when the navigation function is executed by the mobile terminal 2, the mobile terminal 2 is held to be placed on a palm of the user. Therefore, the vibration of the vibrator 205 of the mobile terminal 2 is transmitted to the user palm of the mobile terminal 2. By switching the vibrator 205 to be vibrated as appropriate, an acceleration sense can be presented to the user. The user feels the acceleration sense, thereby recognizing intuitively the travelling direction. The user can recognize the travelling direction without confirming the map data displayed on the display unit 202 each time. Hereinafter, a specific embodiment will be described.

For example, it is supposed that the directional information showing a "front" is inputted to the vibration control unit 215. In this case, the vibration control unit 215 vibrates the vibrator near a user side at the beginning, and changes the vibrated position to the direction similar to the direction to be travelled by the user.

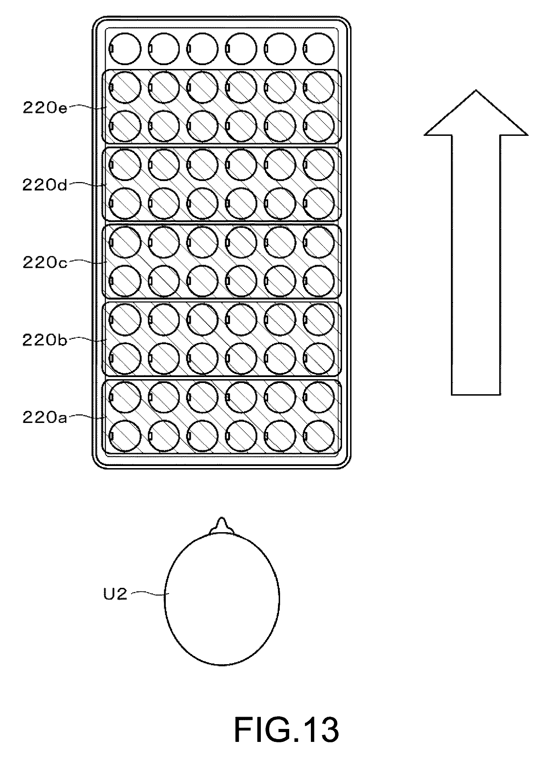

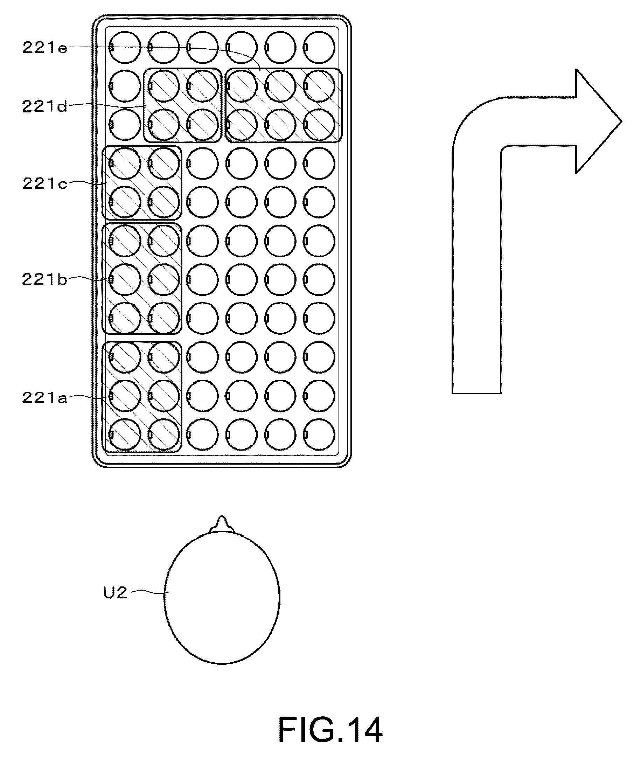

Fig. 13 shows a specific embodiment of the change in the vibrated position. In Fig. 13 and Fig. 14, the user is schematically shown as a user U2. The vibration control unit 215 vibrates two columns of 12 vibrators 220a at the beginning positioned near the user. Next, the vibration control unit 215 stops the vibration of the vibrators 220a, and vibrates 12 vibrators 220b adjacent to the vibrators 220a. Next, the vibration control unit 215 stops the vibration of the vibrators 220b, and vibrates 12 vibrators 220c adjacent to the vibrators 220b. Next, the vibration control unit 215 stops the vibration of the vibrators 220c, and vibrates 12 vibrators 220d adjacent to the vibrators 220c. Next, the vibration control unit 215 stops the vibration of the vibrators 220d, and vibrates 12 vibrators 220e adjacent to the vibrators 220d. The vibrated positions are switched in about 0.3 seconds to 0.5 seconds, and a series of vibration switching is ended in one second to several seconds.

The change in the vibrated position is transmitted to the user palm. In this way, the user can feel the acceleration sense to direct front. Note that the control to change the vibrated position may be repeated several times.

For example, it is supposed that the directional information showing a "right direction" is inputted to the vibration control unit 215. In this case, the vibration control unit 215 vibrates the vibrator at the beginning near the user side and positioned left viewed from the user, and switches the vibrated position into the direction corresponding to the direction to be travelled by the user.

Fig. 14 shows a specific embodiment of the change in the vibrated position. The vibration control unit 215 is positioned near the user U2, and vibrates six vibrators 221a at the beginning positioned left viewed from the user. Next, the vibration control unit 215 stops the vibration of the vibrators 221a, and vibrates six vibrators 221b adjacent to the vibrators 221a at a front side of the user U2. Next, the vibration control unit 215 stops the vibration of the vibrators 221b, and vibrates four vibrators 221c adjacent to the vibrators 221b at a front of the user U2. Next, the vibration control unit 215 stops the vibration of the vibrators 221c, and vibrates four vibrators 221d adjacent to the vibrators 221c and including the vibrators positioned right from the vibrators 221c. Next, the vibration control unit 215 stops the vibration of the vibrators 221d, and vibrates six vibrators 221e adjacent to the vibrators 221d at a right side of the user U2.

The change in the vibration position is transmitted to the user palm. In this way, the user can feel the acceleration sense to direct right. Note that the control to change the vibration position may be repeated several times. In addition, the vibration time, the magnitude of the vibration, an interval to change the vibrated position, etc. can be set, as appropriate. It should be noted that the change of the vibrated position is only an example, and it is not limited to the change illustrate.

The second embodiment is not limited to the navigation function in the mobile terminal 2. For example, by vibrating a predetermined vibrator while synchronizing with the video image displayed on the display unit 202 of the mobile terminal 2, and changing the vibrated position, the acceleration sense may be presented to the user U2. In this case, the directional information may be supplied from an external device, or may be stored in the storing unit 211 attaching to the video image data, etc.

<3. Third Embodiment>

Next, a third embodiment will be described. The third embodiment is an embodiment that the acceleration sense presentation apparatus is applied to a headphone device.

"Configuration of Headphone Device"

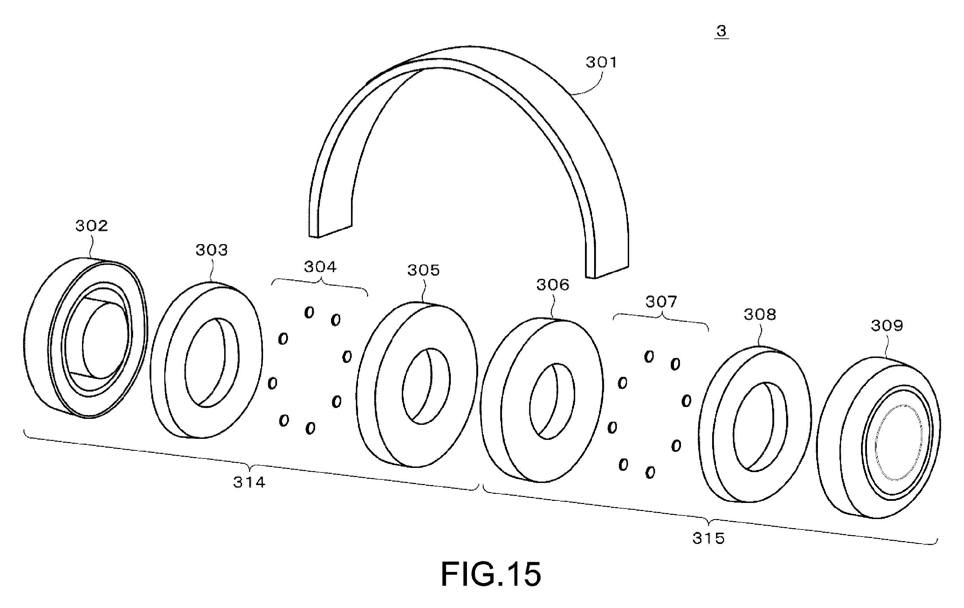

Fig. 15 is an exploded perspective diagram for explaining an example of a configuration of a headphone device in the third embodiment. The headphone device 3 is configured of a head band 301, an R side (Right) outer cover 302, an R side inner cushion 303, an R side vibrator group 304, an R side outer cushion 305, an L side (Left) outer cushion 306, an L side vibrator group 307, an L side inner cushion 308, and an L side outer cover 309.

The R side outer cover 302, the R side inner cushion 303, the R side vibrator group 304, and the R side outer cushion 305 are collectively referred to as an R side headphone 314 as appropriate. The L side outer cover 309, the L side inner cushion 308, the L side vibrator group 307, and the L side outer cushion 306 are collectively referred to as an L side headphone 315 as appropriate.

The head band 301 is a band in contact with the user head. Around an end of the head band 301, a slider mechanism for adjusting a length of the head band 301 may be provided. At an R side end of the head band 301, an R side outer cover 302 is attached, and at an L side end of the head band 301, an L side outer cover 309 is attached.

The R side outer cover 302 includes a housing, and houses a driver unit, a baffle plate, and an R side inner cushion 303 inside. The R side inner cushion 303 is a cushion member housed in the R side outer cover 302. To the R side inner cushion 303, each vibrator configuring the R side vibrator group 304 is fixed. The R side vibrator group 304 includes the vibrators such as vibration motors. In this embodiment, the R side vibrator group 304 is configured of eights vibrators that are arranged almost round at regular intervals (a vibrator 304a, a vibrator 304b, a vibrator 304c, a vibrator 304d, a vibrator 304e, a vibrator 304f, a vibrator 304g, and a vibrator 304h).

The R side outer cushion 305 is in contact with a right ear of the user in the headphone device 3. A material of the R side outer cushion 305 can be leather, sponge, vinyl or the like. It should be appreciated that the material of the R side outer cushion 305 is not limited to a specific material. Although the material of the R side outer cushion 305 and a thickness of the R side outer cushion 305 can be set as appropriate, the material and the thickness are set such that the vibration of each vibrator in the R side vibrator group 304 can be transmitted to the user ears.

The L side outer cover 309 includes a housing, and houses a driver unit, a baffle plate, and an L side inner cushion 308 inside. The L side inner cushion 308 is a cushion member housed in the L side outer cover 309. To the L side inner cushion 308, each vibrator configuring the L side vibrator group 307 is fixed. The L side vibrator group 307 includes the vibrators such as vibration motors. In this embodiment, the L side vibrator group 307 is configured of eights vibrators that are arranged almost round at regular intervals (a vibrator 307a, a vibrator 307b, a vibrator 307c, a vibrator 307d, a vibrator 307e, a vibrator 307, a vibrator 307g, and a vibrator 307h).

The L side outer cushion 306 is in contact with a left ear of the user in the headphone device 3. A material of the L side outer cushion 306 can be leather, sponge, vinyl or the like. It should be appreciated that the material of the L side outer cushion 306 is not limited to a specific material. Although the material of the L side outer cushion 306 and a thickness of the L side outer cushion 306 can be set as appropriate, the material and the thickness are set such that the vibration of each vibrator in the L side vibrator group 307 can be transmitted to the user ears.

"Electrical Configuration of Headphone Device"

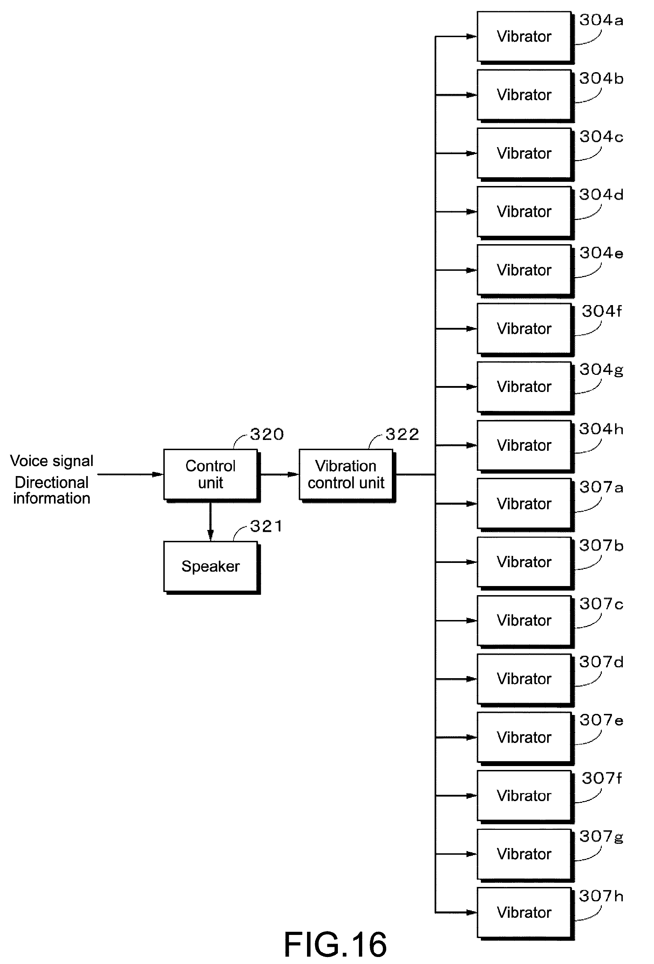

Fig. 16 shows an electrical configuration example of the headphone device 3. The headphone device 3 includes, for example, a control unit 320, a speaker 321, and a vibration control unit 322. Furthermore, as described above, the headphone device 3 includes vibrators 304a to 304h, and vibrators 307a to 307h.

The control unit 320 is configured of, for example, a CPU, and controls each unit of the headphone device 3. To the control unit 320, the sound signal and the directional information are inputted. The sound signal and the directional information are inputted via wire or wireless. The control unit 320 applies processing such as decode processing to the sound signal and the directional information inputted. The sound signal to which predetermined processing is applied by the control unit 320 is supplied to the speaker 321. The directional information to which predetermined processing is applied by the control unit 320 is supplied to the vibration control unit 322.

A driver unit housed in the R side outer cover 302 and a driver unit housed in the L side outer cover 309 are collectively referred to as the speaker 321. The speaker 321 operates corresponding to the sound signal supplied from the control unit 320. Corresponding to the operation of the speaker 321, a predetermined sound signal is regenerated for the user.

The vibration control unit 322 continuously switches a vibration control in the predetermined vibrators in the R side vibrator group 304 and the vibrators in the L side vibrator group 307 corresponding to the directional information. The magnitude of the vibration is set as appropriate such that the vibration is transmitted to the user wearing the headphone device 3.

Although it is described that the vibration control is done by a single vibration control unit 322 in this embodiment, the vibration control unit for controlling vibration of the R side vibrator group 304 may be different from the vibration control unit for controlling vibration of the L side vibrator group 307.

By the vibration control of the vibration control unit 322, predetermined vibrators vibrate. In addition, the vibration points are changed. In this way, the acceleration sense can be presented to the user of the headphone device 3. Hereinafter, a specific embodiment will be described.

"Vibration Control to Vibrator"

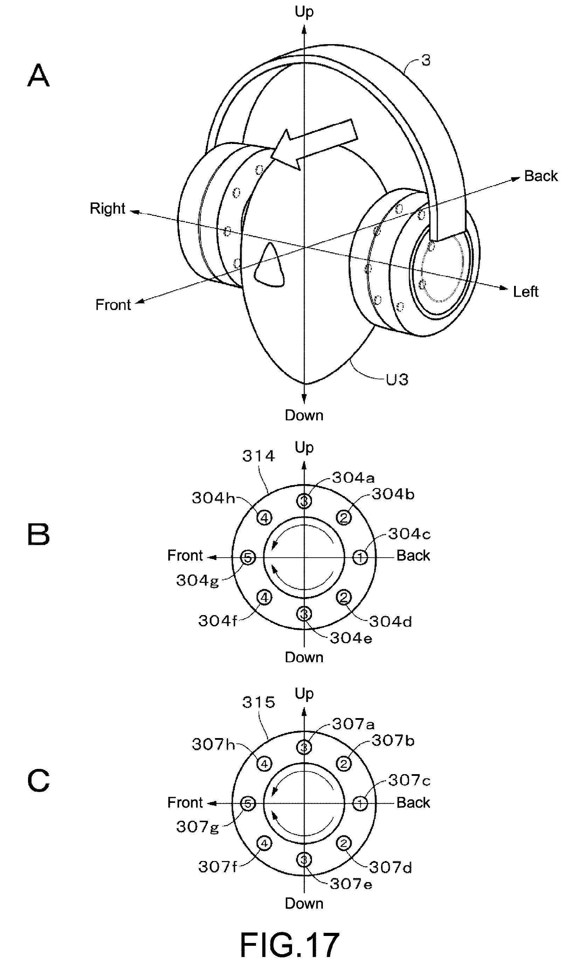

Fig. 17A schematically shows a user wearing the headphone device 3. As shown in Fig. 17A, each direction of front, back, left and right is specified based on a user U3 wearing the headphone device 3. Here, an acceleration directing from back to front is shown by the directional information. In other words, there is an example that presents the user U3 with an acceleration sense directing from back to front. The vibration control in this example will be described.

Fig. 17B shows vibrators configuring the R side vibrator group 304 built-in the R side headphone 314. For example, the vibrator 304a is built-in at an upper side on a vertical axis. From a starting point at the vibrator 304a, the vibrator 304b, the vibrator 304c, the vibrator 304d, the vibrator 304e, the vibrator 304f, the vibrator 304g, and the vibrator 304h are built-in clockwise at regular intervals. The vibrator 304c is positioned at a back side on the lateral axis, the vibrator 304e is positioned at a lower side of the vertical axis, and the vibrator 304g is positioned at a front side on the lateral axis.

Fig. 17C shows vibrators configuring the L side vibrator group 307 built-in the L side headphone 315. For example, the vibrator 307a is built-in at an upper side on the vertical axis. From a starting point at the vibrator 307a, the vibrator 307b, the vibrator 307c, the vibrator 307d, the vibrator 307e, the vibrator 307f, the vibrator 307g and the vibrator 307h are built-in clockwise at regular intervals. The vibrator 307c is positioned at a back side on the lateral axis, the vibrator 307e is positioned at a lower side of the vertical axis, and the vibrator 307g is positioned at a front side on the lateral axis.

The numbers attached to the respective vibrators in Fig. 17B and Fig. 17C show vibration orders. In addition, the arrows in Fig. 17B and Fig. 17C each shows a change direction at the vibration position. The vibrators having the same number vibrate substantially at the same time.

First, the vibration control unit 322 vibrates the vibrator 304c in the R side vibrator group 304 and the vibrator 307c in the L side vibrator group 307 substantially at the same time.

At the next timing, the vibration control unit 322 vibrates the vibrator 304b and the vibrator 304d in the R side vibrator group 304 and the vibrator 307b and the vibrator 307d in the L side vibrator group 307 substantially at the same time.

At the next timing, the vibration control unit 322 vibrates the vibrator 304a the vibrator 304e in the R side vibrator group 304 and the vibrator 307a the vibrator 307e in the L side vibrator group 307 substantially at the same time.

At the next timing, the vibration control unit 322 vibrates the vibrator 304h and vibrator 304f in the R side vibrator group 304 and the vibrator 307h and the vibrator 307f in the L side vibrator group 307 substantially at the same time.

At the next timing, the vibration control unit 322 vibrates the vibrator 304g in the R side vibrator group 304 and the vibrator 307g in the L side vibrator group 307 substantially at the same time. An interval to switch the vibration can be set as appropriate, but is about 0.2 seconds to about 0.5 seconds, as an example. Between about one second to about 2 seconds, a series of vibration positions are controlled for switching.

Here, the vibrated position is moved from back to front for the user U3. In other words, an acceleration sense directing from back to front can be presented to the user U3. The user U3 tricky perceives as if the user U3 is pressed from back to front.

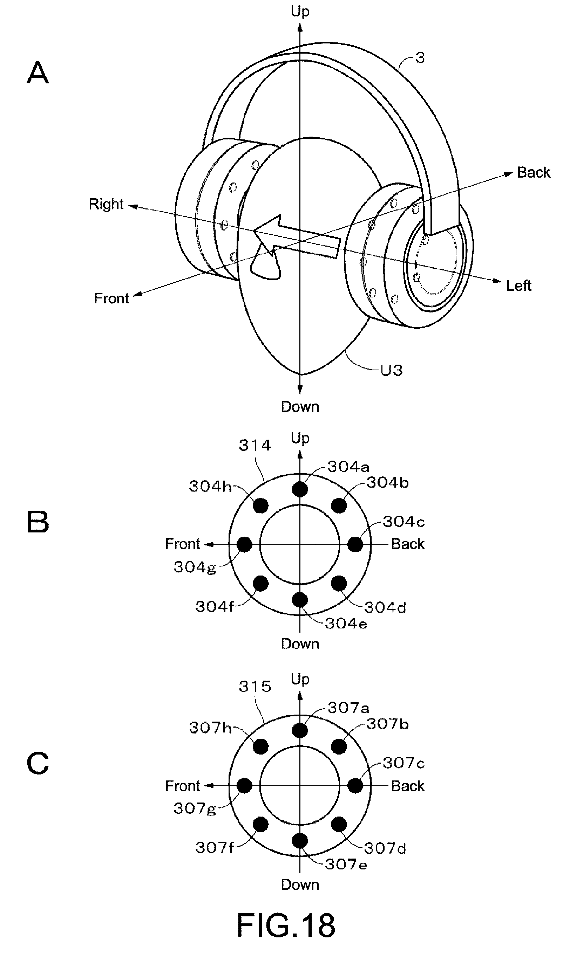

Other embodiment will be described. Fig. 18A schematically shows the user U3 wearing the headphone device 3 similar to Fig. 17A. Here, an acceleration directing from left to right is shown by the directional information. In other words, there is an example that presents the user with an acceleration directing from left to right. The vibration control in this example will be described.

The vibration control unit 322 vibrates eight vibrators configuring the R side vibrator group 304 substantially at the substantially same time. In Fig. 18B, the respective vibrators represented by black dots are vibrated at the substantially same time. On the other hand, the vibration control unit 322 vibrates eights vibrators configuring the L side vibrator group 307 by synchronizing with the vibration of the R side vibrator group 304. In Fig. 18C, the respective vibrators represented by black dots are vibrated at the substantially same time.

Then, the vibration control unit 322 gradually increases the magnitude of the vibration of each vibrator in the R side vibrator group 304. In addition, the vibration control unit 322 gradually attenuates the vibration of each vibrator in the L side vibrator group 307. Finally, the vibration of each vibrator in the L side vibrator group 307 is stopped. By the vibration control, an acceleration sense directing from left to right can be presented to the user U3. The user U3 tricky perceives as if the user U3 is pressed from left to right. Thus, a control to continuously switch a vibrator to be vibrated includes a control to vibrate a part of the vibrators and to attenuate and finally stop the vibration of a part of the vibrators.

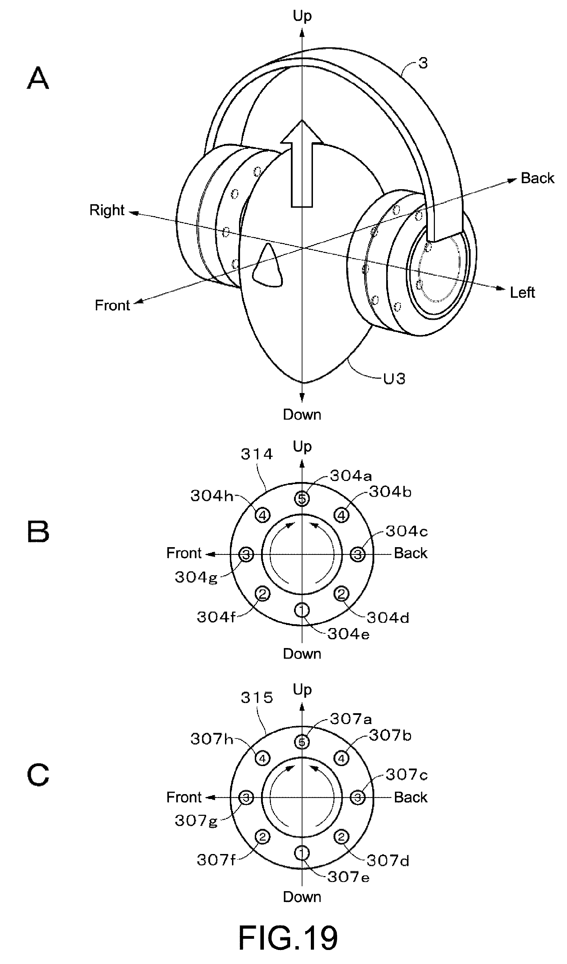

Other embodiment will be described. Fig. 19A schematically shows the user U3 wearing the headphone device 3 similar to Fig. 17A. Here, an acceleration directing from down to up is shown by the directional information. In other words, there is an example that presents the user with an acceleration directing from down to up. The vibration control in this example will be described.

The numbers attached to the respective vibrators in Fig. 19B and Fig. 19C show vibration orders. In addition, the arrows in Fig. 19B and Fig. 19C each shows a change direction at the vibration position. The vibrators having the same number vibrate substantially at the same time.

Firstly, the vibration control unit 322 vibrates the vibrator 304e in the R side vibrator group 304 and the vibrator 307e in the L side vibrator group 307 substantially at the same time.

At the next timing, the vibration control unit 322 vibrates the vibrator 304d and the vibrator 304f in the R side vibrator group 304 and the vibrator 307d and the vibrator 307f in the L side vibrator group 307 substantially at the same time.

At the next timing, the vibration control unit 322 vibrates the vibrator 304c and the vibrator 304g in the R side vibrator group 304 and the vibrator 307c and the vibrator 307g in the L side vibrator group 307 substantially at the same time.

At the next timing, the vibration control unit 322 vibrates the vibrator 304b and vibrator 304h in the R side vibrator group 304 and the vibrator 307b and the vibrator 307h in the L side vibrator group 307 substantially at the same time.

At the next timing, the vibration control unit 322 vibrates the vibrator 304a in the R side vibrator group 304 and the vibrator 307a in the L side vibrator group 307 substantially at the same time. A timing to switch the vibration can be set as appropriate, but is about 0.2 seconds to about 0.5 seconds, as an example. Between about one second to about 2 seconds, the vibration is controlled for switching.

Here, the vibrated point is moved from down to up for the user. In other words, the acceleration sense directing from down to up is presented to the user U3. The user U3 tricky perceives as if the user U3 is pressed from down to up.

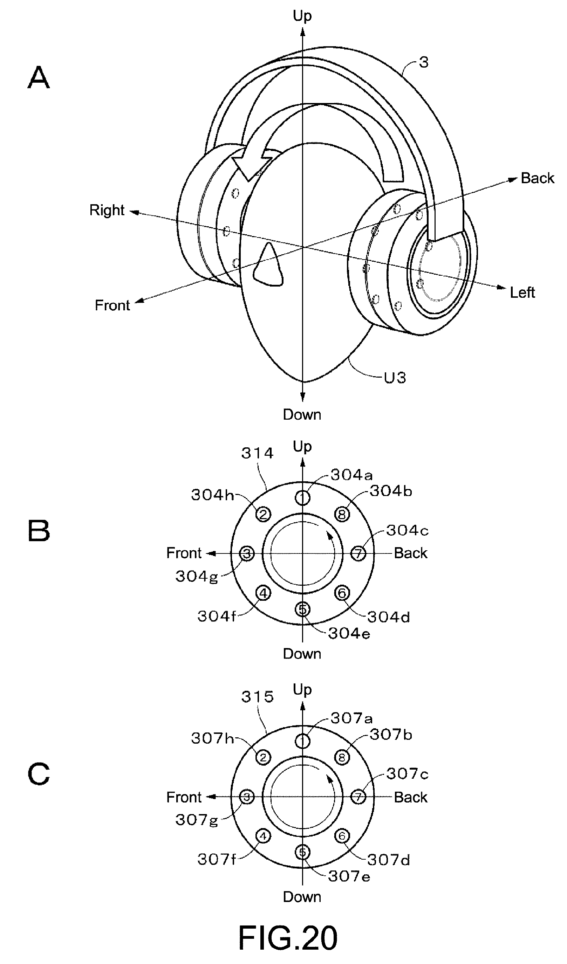

Other embodiment will be described. Fig. 20A schematically shows the user U3 wearing the headphone device 3 similar to Fig. 17A. Here, a positive angular speed (or a negative angular speed) that rotates front in the lateral direction is shown by the directional information. In other words, there is an example that presents the user with an acceleration directing from down to up. The vibration control in this example will be described.

The numbers attached to the respective vibrators in Fig. 20B and Fig. 20C show vibration orders. In addition, the arrows in Fig. 20B and Fig. 20C each shows a change direction at the vibration position. The vibrators having the same number vibrate substantially at the same time.

Firstly, the vibration control unit 322 vibrates the vibrator 304a in the R side vibrator group 304 and the vibrator 307a in the L side vibrator group 307 substantially at the same time.

The vibration control unit 322 changes the vibration positions in the R side vibrator group 304 and the L side vibrator group 307 in the same direction, for example, anticlockwise. In other words, at the next timing, the vibration control unit 322 vibrates the vibrator 304h in the R side vibrator group 304 and the vibrator 307h in the L side vibrator group 307 substantially at the same time.

At the next timing, the vibration control unit 322 vibrates the vibrator 304g in the R side vibrator group 304 and the vibrator 307g in the L side vibrator group 307 substantially at the same time. At the next timing, the vibration control unit 322 vibrates the vibrator 304f in the R side vibrator group 304 and the vibrator 307f in the L side vibrator group 307 substantially at the same time. At the next timing, the vibration control unit 322 vibrates the vibrator 304e in the R side vibrator group 304 and the vibrator 307e in the L side vibrator group 307 substantially at the same time.

At the next timing, the vibration control unit 322 vibrates the vibrator 304d in the R side vibrator group 304 and the vibrator 307d in the L side vibrator group 307 substantially at the same time. At the next timing, the vibration control unit 322 vibrates the vibrator 304c in the R side vibrator group 304 and the vibrator 307c in the L side vibrator group 307 substantially at the same time. At the next timing, the vibration control unit 322 vibrates the vibrator 304b in the R side vibrator group 304 and the vibrator 307b in the L side vibrator group 307 substantially at the same time. A timing to switch the vibration can be set as appropriate, but is about 0.2 seconds to about 0.5 seconds, as an example. Between about one second to several seconds, the vibration is controlled for switching.

Here, the vibrated position is moved rotating to front. In other words, an acceleration sense rotating to front can be presented to the user U3. The user U3 tricky perceives as if the head moves to front. Note that in this case, the magnitude (strength) of the vibration may be gradually decreased. In this way, the rotation to front can be emphasized.

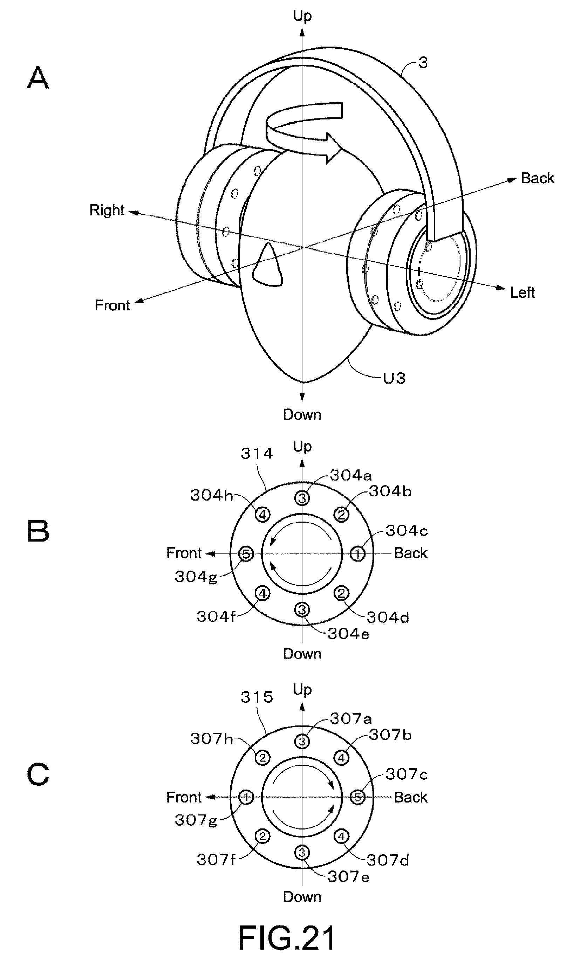

Other embodiment will be described. Fig. 21A schematically shows the user U3 wearing the headphone device 3 similar to Fig. 17A. Here, a positive angular speed (or a negative angular speed) around the vertical direction (Z axis) is shown by the directional information. In other words, there is an example that presents the user with an acceleration sense that rotates from right to left around the vertical axis. The vibration control in this example will be described.

The numbers attached to the respective vibrators in Fig. 21B and Fig. 21C show vibration orders. In addition, the arrows in Fig. 21B and Fig. 21C each shows a change direction at the vibration position. The vibrators having the same number vibrate substantially at the same time. In this embodiment, the vibration control unit 322 controls such that the change direction of the vibration in the R side headphone 314 is opposite to the change direction of the vibration in the L side headphone 315.

Firstly, the vibration control unit 322 vibrates the vibrator 304c in the R side vibrator group 304 and the vibrator 307g in the L side vibrator group 307 substantially at the same time.

At the next timing, the vibration control unit 322 vibrates the vibrator 304b and the vibrator 304d in the R side vibrator group 304 and the vibrator 307h and the vibrator 307f in the L side vibrator group 307 substantially at the same time.

At the next timing, the vibration control unit 322 vibrates the vibrator 304a and the vibrator 304e in the R side vibrator group 304 and the vibrator 307a and the vibrator 307e in the L side vibrator group 307 substantially at the same time.

At the next timing, the vibration control unit 322 vibrates the vibrator 304h and vibrator 304f in the R side vibrator group 304 and the vibrator 307b and the vibrator 307d in the L side vibrator group 307 substantially at the same time.

At the next timing, the vibration control unit 322 vibrates the vibrator 304g in the R side vibrator group 304 and the vibrator 307c in the L side vibrator group 307 substantially at the same time. A timing to switch the vibration can be set as appropriate, but is about 0.2 seconds to about 0.5 seconds, as an example. Between about one second to about 2 seconds, the vibration is controlled for switching.

Here, the change directions of the vibrated positions of the lateral vibrator groups are opposite. In other words, while the acceleration sense directing to front by the change in the vibrated position in the R side headphone 314 is presented to the user U3, the acceleration sense rotating from right to left around the vertical direction is presented to the user U3 by changing the vibrated position in the L side headphone 315 to cancel it. Note that it is desirable that a vibration magnitude of the vibrators in the R side headphone 314 is greater than a vibration magnitude of the vibrators in the L side headphone 315. The user U3 tricky perceives as if own face is turned to left.

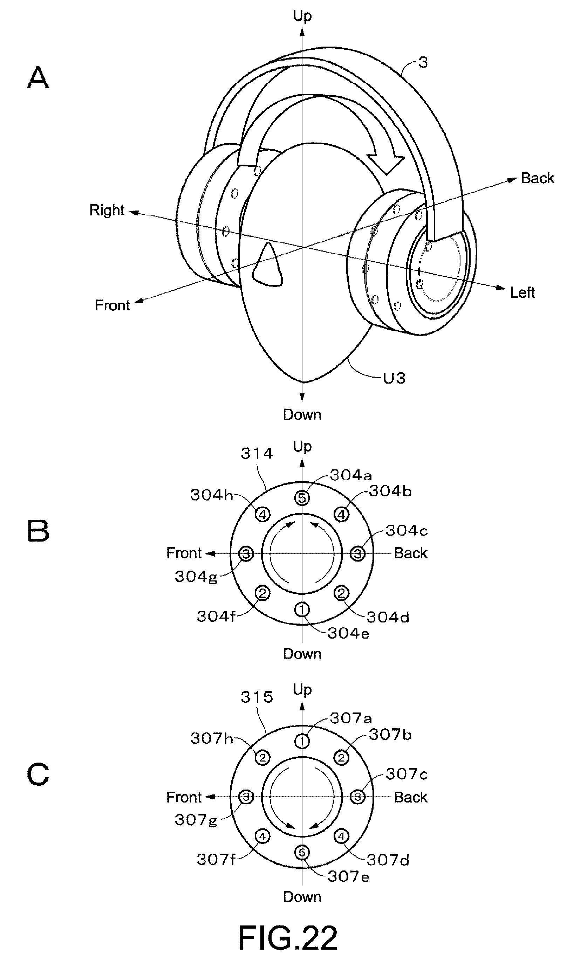

Other embodiment will be described. Fig. 22A schematically shows the user U3 wearing the headphone device 3 similar to Fig. 17A. Here, a positive angular speed (or a negative angular speed) around an axis in the lateral direction (X axis) is shown by the directional information. In other words, there is an example that presents the user with an acceleration directing from right to left. The vibration control in this example will be described.

The numbers attached to the respective vibrators in Fig. 22B and Fig. 22C show vibration orders. In addition, the arrows in Fig. 22B and Fig. 22C each shows a change direction at the vibration position. The vibrators having the same number vibrate substantially at the same time. In this embodiment, the vibration control unit 322 controls such that the change direction of the vibration in the R side headphone 314 is upward, and the change direction of the vibration in the L side headphone 315 is downward.

Firstly, the vibration control unit 322 vibrates the vibrator 304e in the R side vibrator group 304 and the vibrator 307a in the L side vibrator group 307 substantially at the same time.

At the next timing, the vibration control unit 322 vibrates the vibrator 304d and the vibrator 304f in the R side vibrator group 304 and the vibrator 307b and the vibrator 307h in the L side vibrator group 307 substantially at the same time.

At the next timing, the vibration control unit 322 vibrates the vibrator 304c and the vibrator 304g in the R side vibrator group 304 and the vibrator 307c and the vibrator 307g in the L side vibrator group 307 substantially at the same time.

At the next timing, the vibration control unit 322 vibrates the vibrator 304b and vibrator 304h in the R side vibrator group 304 and the vibrator 307d and the vibrator 307f in the L side vibrator group 307 substantially at the same time.

At the next timing, the vibration control unit 322 vibrates the vibrator 304a in the R side vibrator group 304 and the vibrator 307e in the L side vibrator group 307 substantially at the same time. A timing to switch the vibration can be set as appropriate, but is about 0.2 seconds to about 0.5 seconds, as an example. Between about one second to about 2 seconds, the vibration is controlled for switching.

Here, one change direction of the vibrated position of either of the lateral vibrator groups is upward and the other change direction is downward. In this way, the acceleration sense rotating from light to left around the lateral axis can be presented to the user U3. The user U3 tricky perceives as if own face is turned to left.

As described above, by changing the vibrated positions in the headphone device, the acceleration sense corresponding to the directional information can be presented to the user. Note that when the acceleration sense is presented, a sound may be generated from the headphone device and an acceleration synchronized with the sound may be presented. Furthermore, the head band 301 may be configured of a plurality of vibrators built therein. The vibrated positions may be changed in the direction shown by the directional information (for example, a lateral direction).

<4. Alternative Embodiment>

While the embodiments of the present disclosure is illustrated for particular applications, it should be understood that the present disclosure is not limited thereto and variations and modifications are possible based on the technical spirit of the present disclosure.

The acceleration sense presentation apparatus of the present disclosure is applicable not only to a head gear type device, but to a device that can transmit vibration and a change in a vibrated position to a body. For example, a vibrator may be built-in a part of a glass and a vibrated position of the vibrator may be changed.

At an adequate position of the head gear type device, one or a plurality of fans may be disposed. While the acceleration is presented, a user may be provided with a wind pressure depending on the acceleration shown by the directional information.

A movement of a user of the acceleration sense presentation apparatus may be acquired by a sensor or the like. Depending on a posture of the user, the directional information may be corrected, and the vibrated positions may be changed based on the directional information corrected.

The present disclosure can be put into practice not only by the apparatus, but by a method, a program and a system. The program may be provided to the user via a network, or a portable memory such as an optical disk and a semiconductor memory.

The configurations and processing in the embodiments and alternative embodiment may be combined as appropriate, as long as no technical conflict is generated. The order of the processing in the illustrated flows can be changed, as long as no technical conflict is generated.

The present disclosure may be applicable to a so-called cloud system where illustrated processing is distributed and processed by a plurality of apparatuses. The present disclosure may be achieved in a system where processing illustrated in the embodiments and alternative embodiment is executed, i.e., an apparatus for executing at least a part of the processing illustrated.

The present disclosure may have the following configurations.

(1) An acceleration sense presentation apparatus, including:

a vibrator group including a plurality of vibrators;
an input unit to which information having directivity is inputted; and
a vibration control unit for continuously switching a vibrator to be vibrated based on the information having directivity.

(2) The acceleration sense presentation apparatus according to (1) above, in which
the vibration control unit continuously switches the vibrator to be vibrated in a direction corresponding to the information having directivity.

(3) The acceleration sense presentation apparatus according to (1) or (2) above, in which the information having directivity is at least one of information about an acceleration in an X axis direction, information about an acceleration in a Y axis direction, information about an acceleration in a Z axis direction, an angular speed around the X axis direction, an angular speed around the Y axis direction, an angular speed around the Z axis direction, and information about a direction to be traveled by a user.

(4) The acceleration sense presentation apparatus according to any one of (1) to (3) above, in which the vibration control unit continuously switches the vibrator to be vibrated per unit of one or a plurality of vibrators.

(5) The acceleration sense presentation apparatus according to any one of (1) to (4) above, in which the information having directivity is supplied via a network.

(6) The acceleration sense presentation apparatus according to any one of (1) to (5) above, in which the information having directivity is synchronized with at least one of video image information and sound information.

(7) The acceleration sense presentation apparatus according to any one of (1) to (6) above, further including:

a head mount display for regenerating video image information.

(8) The acceleration sense presentation apparatus according to any one of (1) to (7) above, further including:

a speaker for regenerating sound information.

(9) The acceleration sense presentation apparatus according to any one of (1) to (8) above, in which the vibration control unit vibrates the vibrator by a driving signal modulated by PWM (Pulse Width Modulation).

(10) A acceleration sense presentation method in the acceleration sense presentation apparatus, including:

inputting information having directivity; and continuously switching a vibrator to be vibrated based on the information having directivity.

(11) An acceleration sense presentation system, including:

a first apparatus and a second apparatus, the first apparatus having a supply unit for supplying the second apparatus with information having directivity, and the second apparatus having a vibrator group having a plurality of vibrators, an input unit to which information having directivity is inputted, and a vibration control unit for continuously switching a vibrator to be vibrated based on the information having directivity.

(12) The acceleration sense presentation system according to (11) above, in which the first apparatus is at least one of:

an image capturing apparatus, a passenger apparatus equipped with an image capturing apparatus, a passenger apparatus to be remote-controlled, a robot to be remote-controlled, a remote control model, and a game device executing a game program.

Description of Numerals

| 1 | head gear type device |
|---|---|
| 105 | first vibrator |
| 106 | second vibrator |
| 110 | vibrator group |
| 120 | first vibration control unit |
| 121 | second vibration control unit |
| 2 | mobile terminal |
| 205 | vibrator |
| 206 | vibrator group |
| 215 | vibration control unit |
| 3 | headphone device |
| 304 | vibrator group |
| 307 | vibrator group |
| 322 | vibration control unit |

**Claims**

1. An acceleration sense presentation apparatus, comprising:

a vibrator group including a plurality of vibrators; an input unit to which information having directivity is inputted; and a vibration control unit for continuously switching a vibrator to be vibrated based on the information having directivity.

2. The acceleration sense presentation apparatus according to claim 1, wherein the vibration control unit continuously switches the vibrator to be vibrated in a direction corresponding to the information having directivity.

**3.** The acceleration sense presentation apparatus according to claim 1, wherein
the information having directivity is at least one of information about an acceleration in an X axis direction, information about an acceleration in a Y axis direction, information about an acceleration in a Z axis direction, an angular speed around the X axis direction, an angular speed around the Y axis direction, an angular speed around the Z axis direction, and information about a direction to be traveled by a user.

**4.** The acceleration sense presentation apparatus according to claim 1, wherein
the vibration control unit continuously switches the vibrator to be vibrated per unit of one or a plurality of vibrators.

**5.** The acceleration sense presentation apparatus according to claim 1, wherein
the information having directivity is supplied via a network.

**6.** The acceleration sense presentation apparatus according to claim 1, wherein
the information having directivity is synchronized with at least one of video image information and sound information.

**7.** The acceleration sense presentation apparatus according to claim 1, further comprising:

a head mount display for regenerating video image information.

**8.** The acceleration sense presentation apparatus according to claim 1, further comprising:

a speaker for regenerating sound information.

**9.** The acceleration sense presentation apparatus according to claim 1, wherein
the vibration control unit vibrates the vibrator by a driving signal modulated by PWM (Pulse Width Modulation).

**10.** A acceleration sense presentation method in the acceleration sense presentation apparatus, comprising:

inputting information having directivity; and continuously switching a vibrator to be vibrated based on the information having directivity.

**11.** An acceleration sense presentation system, comprising:

a first apparatus and a second apparatus,

the first apparatus having a supply unit for supplying the second apparatus with information having directivity, and
the second apparatus having a vibrator group having a plurality of vibrators, an input unit to which information having directivity is inputted, and a vibration control unit for continuously switching a vibrator to be vibrated based on the information having directivity.

**12.** The acceleration sense presentation system according to claim 11, wherein
the first apparatus is at least one of:

an image capturing apparatus, a passenger apparatus equipped with an image capturing apparatus, a passenger apparatus to be remote-controlled, a robot to be remote-controlled, a remote control model, and a game device executing a game program.

EP 2 977 858 A1

FIG.1

16

FIG.2

FIG.3

FIG.4

FIG.5

FIG.6

A

Front
↑ X

101

105l
105a
105b

105k
105c

Y
Left ◄ - - - - - - - - - - - - - - - - - - ► Right
105d

105j

105i

105h
105g
105f
105e

Rear

B

Up
↑ X

102

106e
106d
106c

106f
106b

106g
Y
Left ◄ - - - - - - - - - - - - - - - - - - ► Right
106a

FIG.7

A

Front

101

105l    105a    105b

105k    ax    105c

θl    105d

Y    Right
Left    ay
105j    105i    105e

105h    105f

105g

Rear

B

Up

102

106e    106d    106c

106f    ax    106b

θv    106a

Y    Right
Left    ay

FIG.8

A

Acceleration
great

B

Acceleration
small

C

Acceleration
zero

# FIG.9

FIG.10

FIG.11

FIG.12

220e
220d
220c
220b
220a

U2

FIG.13

221e

221d

221c

221b

221a

U2

FIG.14

FIG.15

FIG.16

A

Up

3

Right

Back

Front

Left

U3

Down

B

314

Up

304h

304a

304b

④ ③ ②

Front ⑤ ① Back

304g

304c

④ ② 

304f

③

304d

Down

304e

C

315

Up

307h

307a

307b

④ ③ ②

Front ⑤ ① Back

307g

307c

④ ② 

307f

③

307d

Down

307e

FIG.17

FIG.18

A

B

C

FIG.19

A

Up

Right

Front

Back

Left

3

U3

Down

B

314

Up

304h
304a
304b

②

①

⑧

Front ← ③

Back

304c

⑦

304g

④

⑥

304d

⑤

304f

304e

Down

C

315

Up

307h
307a
307b

②

①

⑧

Front ← ③

Back

307c

⑦

307g

④

⑥

307d

⑤

307f

307e

Down

# FIG.20

A

Up

3

Back

Right

Left

Front

U3

Down

B

314

Up

304a

304h

304b

Front

304c

Back

304g

304f

304d

304e

Down

C

315

Up

307a

307h

307b

Front

307c

Back

307g

307f

307d

307e

Down

FIG.21

A

Up

3

Back

Right

Left

Front

U3

Down

B

314

Up

304a

304h ④ ⑤ ④ 304b

304c

Front ③ ③ Back

304g

② ① ② 304d

304f 304e

Down

C

315

Up

307a

307h ② ① ② 307b

307c

Front ③ ③ Back

307g

④ ⑤ ④ 307d

307f 307e

Down

# FIG.22

<div align="center">

**INTERNATIONAL SEARCH REPORT**

</div>

| | International application No. |
|---|---|
| | PCT/JP2014/000695 |

**A. CLASSIFICATION OF SUBJECT MATTER**
*G06F3/01(2006.01)i*

According to International Patent Classification (IPC) or to both national classification and IPC

**B. FIELDS SEARCHED**

Minimum documentation searched (classification system followed by classification symbols)
G06F3/01

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-185129 A (Sega Enterprises, Ltd.), 25 July 1995 (25.07.1995), entire text; all drawings (Family: none) | 1-12 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May, 2014 (07.05.14) | 20 May, 2014 (20.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000210468 A